# EUROPEAN PATENT APPLICATION

(11) **EP 2 871 511 A1**
(43) Date of publication of application: **13.05.2015**
(21) Application number: 14003783.9
(22) Date of filing: 11.11.2014
(51) Int. Cl.: G02B 21/00, G02B 27/58

(54) **Spinning disk confocal using paired microlens disks**

(30) Priority: 12.11.2013 US 201361902958 P; 29.10.2014 US 201414526952
(71) Applicant: Intelligent Imaging Innovations, Inc., Denver, CO 80216 (US)
(72) Inventor: Redford, Glen Ivan, Arvada, Colorado 80004 (US)
(74) Representative: Von Rohr Patentanwälte Partnerschaft mbB

(57) **Abstract**

A spinning-disk confocal unit uses a pair of microlens arrays to create an infinity space directly after the pinhole array. This at least allows flexibility in the confocal unit design and also allows incorporation of superresolution.

## Description

### RELATED APPLICATION DATA

This application claims the benefit of and priority under 35 U.S.C. §119(e) to U.S. Patent Application No. 61/902,958, filed November 12, 2013, entitled "Fast Pinhole Changer for Confocal Microscopy or Spatial Filter," which is incorporated herein by reference in its entirety.

### BACKGROUND

A popular technique for fluorescence microscopy is full-field confocal microscopy. This technique which includes spinning disk, slit-scanning, pinhole-scanning and other devices allows confocal optical sectioning while imaging with a two-dimensional sensor array (that is a camera or CCD). This technique allows faster and often cheaper confocal imaging when compared to scanning-confocal systems. There are several commercially available spinning disk systems and a variety of current patents on these techniques. An exemplary aspect of this invention is an improvement on these techniques. Related patents include the following (each of which are incorporated herein by reference in their entirety):
1. EP 1 245 986 B1, Yokogawa
2. EP 0 753 779 B1, Yokogawa
3. US 6,934,079 B2, Stefan Hell
4. WO 2013126762 A1, Hari Shroff

References 1 and 2 directly apply to currently available commercial systems and serve as a basis for an exemplary aspect of the invention. In these references, there are two main optical elements that provide the main functionality of the system. One is a Nipkow array of pinholes on a disk that provides the optical sectioning in the confocal unit. Two is a matched Nipkow array of microlenses that serve to focus the excitation light through the pinholes to greatly increase the throughput of the excitation. A dichroic is then placed between these elements to separate the emission from the excitation. Reference 3 adds a second microlens array that forms a relay with the first microlens array before the pinhole array. The excitation in this case does not pass through the pinholes, and the dichroic introduces the excitation while allowing the emission to pass through the pinholes.

Reference 4 from above describes a method of using local optical compression to achieve superresolution results in the optical system. It relies on the ability to compress the image of each pinhole separate from its neighbors before combining them into the final image. This can be achieved by having a relay of microlenses after the pinhole array, where the relay de-magnifies the images of the pinholes.

Some of the exemplary problems with current commercial designs of spinning disk units include the insertion of the dichroic into a diverging space of the image path - this causes loss of performance in the dichroic. Also, the distance between the pin-holes and the microlenses is highly critical and is directly related to the field size. This causes difficulties when using the device with a different sized sensor. Also, none of these current designs can incorporate the local optical compression necessary for superresolution.

Confocal microscopy is an optical imaging technique for increasing optical resolution and contrast of a micrograph by means of adding a spatial pinhole placed at the confocal plane of the lens to eliminate out-of-focus light. It enables the reconstruction of three-dimensional structures from the obtained images. This technique has gained popularity in the scientific and industrial communities and typical applications are in life sciences, semiconductor inspection and materials science.

The principle of confocal imaging was patented in 1957 by Marvin Minsky and overcome some limitations of traditional wide-field fluorescence microscopes. In a conventional (i.e., wide-field) fluorescence microscope, the entire specimen is flooded evenly in light from a light source. All parts of the specimen in the optical path are excited at the same time and the resulting fluorescence is detected by the microscope's photodetector or camera including a large unfocused background part. In contrast, a confocal microscope uses point illumination (see Point Spread Function) and a pinhole in an optically conjugate plane in front of the detector to eliminate out-of-focus signals - the name "confocal" stems from this configuration. As only light produced by fluorescence very close to the focal plane can be detected, the image's optical resolution, particularly in the sample depth direction, is much better than that of wide-field microscopes. However, as much of the light from sample fluorescence is blocked at the pinhole, this increased resolution is at the cost of decreased signal intensity- hence long exposures are often required.

As only one point in the sample is illuminated at a time, 2D or 3D imaging requires scanning over a regular raster (i.e., a rectangular pattern of parallel scanning lines) in the specimen. The achievable thickness of the focal plane is defined mostly by the wavelength of the used light divided by the numerical aperture of the objective lens, but also by the optical properties of the specimen. The thin optical sectioning possible makes these types of microscopes particularly good at 3D imaging and surface profiling of samples.

Spinning-disk (Nipkow disk) confocal microscopes use a series of moving pinholes on a disc to scan spots of light. Since a series of pinholes scans an area in parallel each pinhole is allowed to hover over a specific area for a longer amount of time thereby reducing the excitation energy needed to illuminate a sample when compared to laser scanning microscopes. Decreased excitation energy reduces photo-toxicity and photo-bleaching of a sample often making it the preferred system for imaging live cells or organisms. (See Wikipedia)

### FIELD

An exemplary aspect of this invention generally relates to spinning-disk confocal microscopes. More specifically, an exemplary embodiment of this invention relates to a spinning disk confocal device. Even more specifically, an exemplary embodiment of this invention relates to a spinning disk confocal device that uses a pair of microlens arrays.

### SUMMARY

The invention provides an improved device according to claim 1 and an improved method according to claim 14. The subclaims refer to preferred embodiments.

An exemplary aspect of this device has three primary optical elements. The first is a pinhole array placed in the image plane of the microscope. These pinholes provide the confocal optical sectioning desired. The second is a first microlens array that is used to focus excitation light from an excitation light source through the pin-holes and to collimate the emission from the pinholes. The third is a second microlens array that is used to locally image each pinhole onto a sensor such as a CCD. In the infinity space between the microlenses or the microlens arrays, respectively, a dichroic is placed so that the excitation light may be injected through only the first microlens array and the pinhole array. The dichroic is placed in the infinity space in order to attain optimal performance.

By adjusting the relative focal lengths of the two microlens arrays, one can change the local optical compression of the pinhole images. According to the theory, superresolution is achieved when this compression is 2x. This means that the focal length of the second microlens array is half of the focal length of the first microlens array. In an ideal setup, the pinhole image is not inverted, so a negative microlens array is used for the second microlens array.

It is also possible to combine the pinhole array and the first microlens array into the same optical element. This is done by creating a thick disk on which one side has the microlenses and the other side has the pinholes.

The exemplary apparatus can comprise:
a spinning disk confocal unit with a pinhole array,
a microlens array to focus the excitation light into the pinhole array and collimate the emission from the pinholes, and
a second microlens array to image the pinholes onto a sensor and to provide local optical compression.

This device would have the additional advantage of providing superresolution imaging.

Aspects of the invention are thus directed toward spinning-disk confocal microscopes.

Still further aspects of the invention are directed toward a to a spinning disk confo-cal device.

Still further aspects of the invention are directed toward a spinning disk confocal device that uses a pair of microlens arrays.

Even further aspects of the invention are directed toward a spinning-disk confocal unit that can achieve superresolution using local optical compression.

Even further aspects of the invention are directed toward automation and control of the spinning-disk system.

Still further aspects of the invention relate to an apparatus for a spinning-disk confocal device comprising the following primary optical elements:
a pinhole array,
a first microlens array, and
a second microlens array.

The aspect above, wherein the pinholes array and the first microlens array are built into a single optical element.

The aspect above, wherein the second microlens array provides local optical compression by de-magnifying the images of the pinholes.

The aspect above, wherein the focal length of the microlenses of the second microlens array is half of the focal length of the microlenses on the first microlens array.

The aspect above, wherein the dichroic is placed in the infinity space between the microlens arrays.

The aspect above, wherein the device achieves superresolution.

The aspect above, wherein the pinhole and/or two microlens arrays are spun about the same axis, in particular to scan the pinholes over the image plane.

The aspect above, wherein the motorization control device is synchronized with a detector.

The aspect above, wherein the apparatus is attached to an optical microscope.

The aspect above, wherein the apparatus is automated and controlled with a computer program.

These and other features and advantages of this invention are described and/or are apparent from, the following detailed description of the exemplary embodiment.

### BRIEF DESCRIPTION OF THE DRAWINGS

The exemplary embodiments of the invention will be described in detail, with reference to the following figures wherein:
Figure 1 illustrates an exemplary embodiment of a spinning-disk confocal device.
Figure 2 illustrates a graphical representation of the optics of an exemplary embodiment of a spinning disk confocal device.
Figure 3 illustrates a graphical representation of the optics of an exemplary embodiment of a spinning disk confocal device that is made for superresolution.
Figure 4 illustrates a graphical representation of the optics of an ideal embodiment of a spinning disk confocal device that is made for superresolution.

### DETAILED DESCRIPTION

The exemplary embodiments of this invention will be described in relation to micro-scopes, imaging systems, and associated components. However, it should be appreciated that, in general, known components will not be described in detail. For purposes of explanation, numerous details are set forth in order to provide a thorough understanding of the present invention. It should be appreciated however that the present invention may be practiced in a variety of ways beyond the specific details set forth herein.

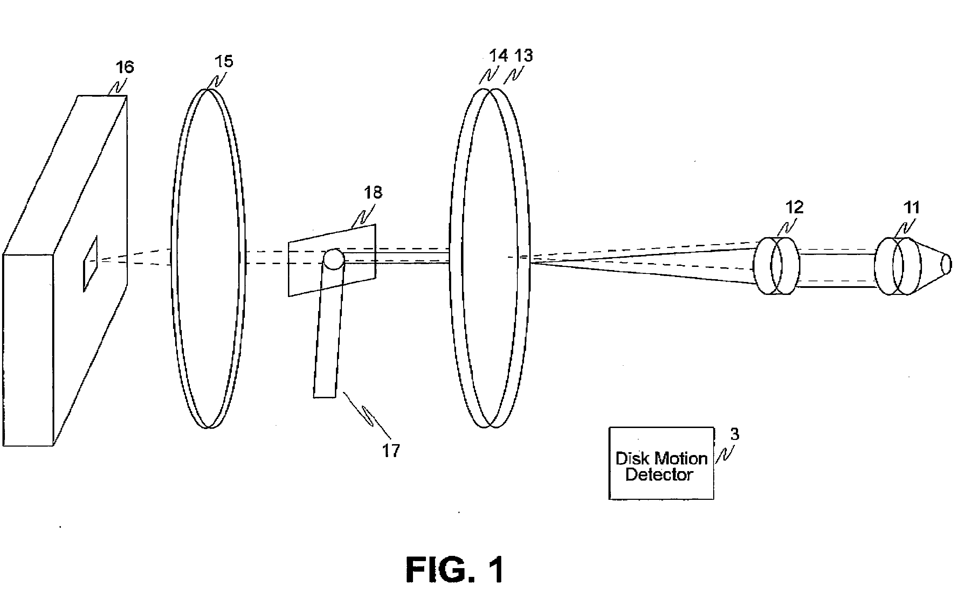

Figure 1 illustrates an exemplary embodiment of a spinning-disk confocal device. Primary optical elements of an exemplary aspect of the invention are provided on disks. A simplified version of a microscope is represented by an objective 11 and a tube lens 12, that are preferably arranged on a common optical axis. A pinhole array 13 is located at the image plane of the tube lens 12. A first microlens array 14 is provided on the other side of the pinhole array 13, i.e. in particular opposite to the tube lens 12 and preferably on a common optical axis together with the tube lens 12 and/or the objective 11. A second microlens array 15 relays an image onto a sensor 16.

In the space between the microlenses, or arrays 14 and 15 the excitation light 17 is injected preferably by means of a dichroic 18. Thus, the excitation light 17 passes only through the first microlens array 14 and pinhole array 13, while the emission passes through the pinhole array 13 and both microlens arrays 14 and 15. In particular, the excitation light 17 passes through the tube lens 12 and objective 11 and/or any other optical elements until it hits an object (not shown) and is reflected/emitted as emission light which passes in opposite direction and after passing the second microlens array 15 can be detected by the detector 16.

In order to illuminate the sample homogeneously, the excitation light 17 is preferably formatted in such a way that an at least essentially even illumination across a field is provided.

The pinhole array 13 and the first microlens array 14 could also be/are a single unit on one disk (not shown).

The confocal device further includes preferably a disk motion detector 3 adapted. Preferably the first and the second microlens arrays 14, 15 are on disks, and the disks are aligned and spun on a single optical axis to scan pinholes over an image plane. The motion of the disks is synchronized preferably by means of the disk motion detector 3, in particular comprising a CCD.

In the following, further embodiments or aspects will be discussed in detail, wherein the previous explanation and aspects preferably apply as well even as not repeated. In particular, the following description refers to special aspects of the general consent or embodiment described with respect to Fig. 1.

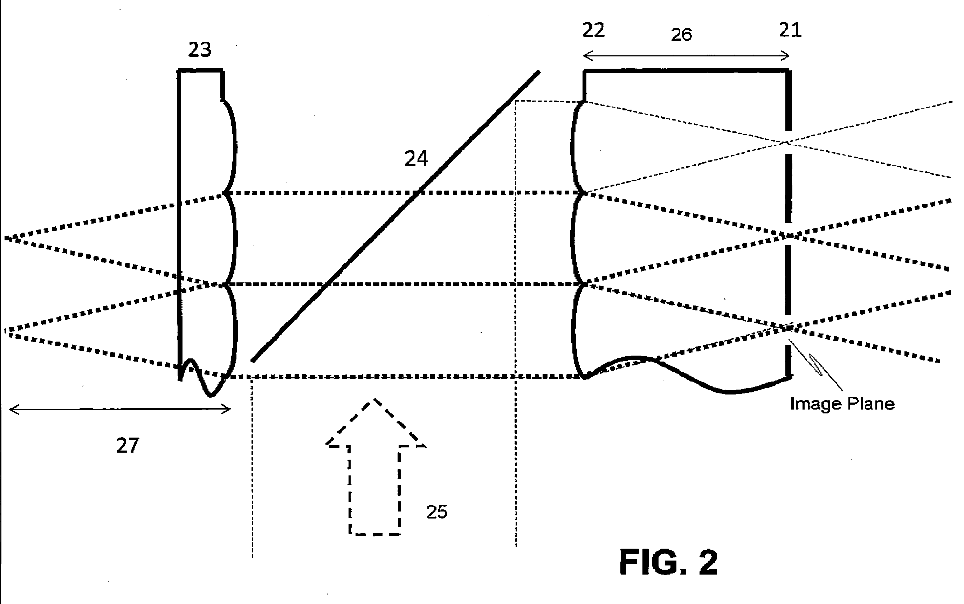

Figure 2 illustrates a graphical representation of the optics of an exemplary embodiment of a spinning disk confocal device. The pinhole array 21 is located at the image plane. The first microlens array 22 and the second microlens array 23 are located after (to the left in the Figure) the pinhole array 21.

A dichroic, 24 is between the two microlens arrays 22, 23 to inject the excitation light 25.

The first microlens array 22 is one focal length 26 of its microlenses away from the pinholes in the pinhole array 21. The focal length 27 of the second microlens array 23, if the same as the first microlens array 22, will not give optical compression.

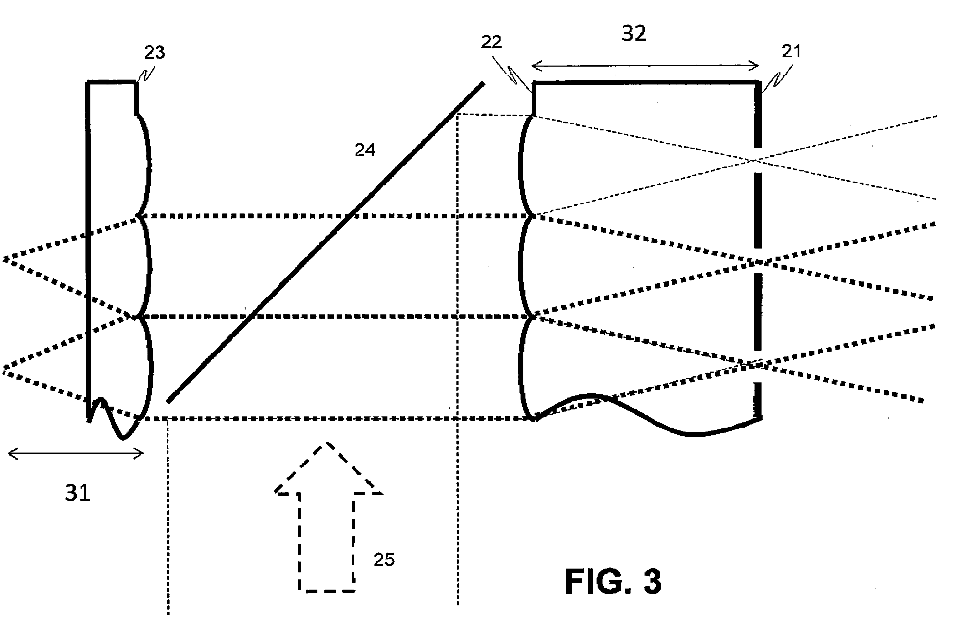

Figure 3 illustrates a graphical representation of the optics of an exemplary embodiment of a spinning disk confocal device that is made for superresolution. This is a copy of Figure 2, only the focal length 31 of the second microlens array 23 is shorter than, preferably half of the focal length 32 of the first microlens array 22. In this arrangement, the images of the pinholes are locally optically compressed (demagnified) to achieve superresolution.

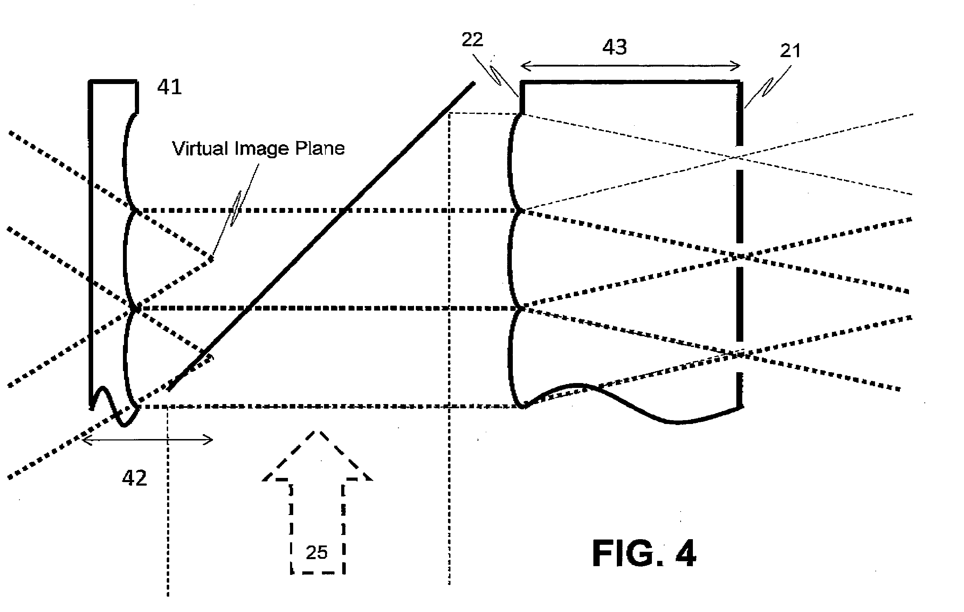

Figure 4 illustrates a graphical representation of the optics of another exemplary embodiment of a spinning disk confocal device that is made for superresolution. In this case the lenses in the second microlens array 41 are negative (concave). The microlens focal length 42 is preferably still shorter than, in particular half of the focal length 43 of the first microlens array 22, but with negative direction, so that a virtual image plane between the disks or the microlens arrays 41, 22 is formed.

The devices and methods of the present invention allow improved imaging and/or optical compression of pinhole images. Scanning a sample layer with the pinholes allows for sequential, i.e. spotwise, imaging of the sample. In particular, the imaged sample layer is hereby the surface of the sample. An at least partially translucent sample, however, can also be scanned layer-by-layer resulting in a set of data, that can afterwards be composed to render a 3D image of the sample.

The exemplary techniques illustrated herein are not limited to the specifically illustrated embodiments but can also be utilized with the other exemplary embodiments and each described feature is individually and separately claimable.

The systems and devices of this invention can cooperate and interface with a special purpose computer, a programmed microprocessor or microcontroller and peripheral integrated circuit element(s), an ASIC or other integrated circuit, a digital signal processor, a hard-wired electronic or logic circuit such as a discrete element circuit, a programmable logic device such as PLD, PLA, FPGA, PAL, any comparable means, or the like.

Furthermore, the disclosed control methods and graphical user interfaces may be readily implemented in software using object or object-oriented software development environments that provide portable source code that can be used on a variety of computer or workstation platforms. Alternatively, the disclosed control methods may be implemented partially or fully in hardware using standard logic circuits or VLSI design. Whether software or hardware is used to implement the systems in accordance with this invention is dependent on the speed and/or efficiency requirements of the system, the particular function, and the particular software or hardware systems or microprocessor or microcomputer systems being utilized.

It is therefore apparent that there has been provided, in accordance with the present invention, a spinning-disk confocal device. While this invention has been described in conjunction with a number of embodiments, it is evident that many alter-natives, modifications and variations would be or are apparent to those of ordinary skill in the applicable arts. Accordingly, it is intended to embrace all such alternatives, modifications, equivalents and variations that are within the spirit and scope of this invention.

## Claims

1. A spinning-disk confocal apparatus, in particular imaging apparatus, comprising:
a pinhole array (21) located at an image plane;
a first microlens array (22) located at a focal length (26) of microlenses or a microscope of the first microlens array (22) from the pinhole array (21); and
a second microlens array (23) located at a distance from the first microlens array (22).

2. The apparatus of claim 1, wherein the first microlens array (22) and the pinhole array (21) are combined into one optical unit or disc.

3. The apparatus of claim 1 or 2, wherein a dichroic (24), in particular located in the optical path between the first microlens array (22) and the second microlens array (23), is used to inject excitation light (25) into the first microlens array (22) and through the pinhole array (21), the dichroic (24) further allowing emission light to pass through the dichroic (24) to the second microlens array (23).

4. The apparatus of one of the preceding claims, wherein the second microlens array (23) de-magnifies local images of the pinholes by having a shorter focal length (27) than the microlenses of the first microlens array (22).

5. The apparatus of one of the preceding claims, wherein the ratio of the focal length (26) of the first microlens array (22) to the focal length (27) of the second microlens array (23) is two.

6. The apparatus of one of the preceding claims, wherein the apparatus achieves an imaging resolution better than the diffraction limit determined by the wavelength of the light imaged, in particular an imaging resolution that is superresolution.

7. The apparatus of one of the preceding claims, wherein the first microlens array (22) and the second microlens array (23) are on disks, and the disks are aligned and spun on a single optical axis, preferably.

8. The apparatus of one of the preceding claims, wherein a motion of the disks is synchronized with a detector, in particular a disk motion detector (3).

9. The apparatus of one of the preceding claims, wherein the excitation light (25) is formatted to provide even illumination across a field.

10. The apparatus of one of the preceding claims, wherein the microlenses of the second microlens array (23) are negative, preferably wherein the ratio of the focal length (26) of the first microlens array (22) to the focal length (27) of the second microlens array (23) is negative two.

11. The apparatus of one of the preceding claims, wherein the first microlens array (22) and the pinhole array (21) are the same element.

12. The apparatus of one of the preceding claims, further comprising:
a sensor or detector (16); and
an excitation light source, in particular located between or guiding light between the first microlens array (22) and the second microlens array (23).

13. The apparatus of one of the preceding claims, further comprising:
an objective (11); and
a tube lens (12),
preferably arranged on a common optical axis, more preferably on a common optical axis together with at least one of the microlens arrays (22,23).

14. A method for imaging of a sample utilizing the apparatus of one of the preceding claims.

15. The method of claim 14, whereby moving pinholes on the pinhole array (21) scan spots of light.
